# EUROPÄISCHE PATENTANMELDUNG

(11) **EP 2 525 115 A2**
(43) Veröffentlichungstag der Anmeldung: **21.11.2012**
(21) Anmeldenummer: 12002971.5
(22) Anmeldetag: 26.04.2012
(51) Int. Cl.: F16F 13/10, F16F 13/18

(54) **Hydrolager**

(30) Priorität: 19.05.2011 DE 102011102076
(71) Anmelder: Carl Freudenberg KG, 69469 Weinheim (DE)
(72) Erfinder: Hettler, Werner, 68309 Mannheim (DE); Guthier, Herbert Otto, 69483 Wald-Michelbach (DE)

(57) **Zusammenfassung**

Hydrolager, umfassend ein Traglager (1) und ein Auflager (2), die durch einen im wesentlichen kegelstumpfförmigen Federkörper (3) aus elastomerem Werkstoff aufeinander abgestützt sind und einen Arbeitsraum (4) und einen Ausgleichsraum (5), die jeweils mit Dämpfungsflüssigkeit (6) gefüllt und durch eine Trennwand (7) in axialer Richtung (8) räumlich voneinander getrennt sowie durch eine erste Dämpfungsvorrichtung (9) zur Dämpfung axial eingeleiteter Schwingungen flüssigkeitsleitend verbunden sind.

Der Federkörper (3) umfasst zumindest zwei Teilfederkörper (3.1, 3.2), die mittels eines Zwischenrings (10) verbunden sind, wobei im Arbeitsraum (4) eine zweite Dämpfungsvorrichtung (11) zur Dämpfung von in radialer Richtung (12) eingeleiteten Schwingungen angeordnet ist und wobei der Zwischenring (10) und die zweite Dämpfungsvorrichtung (11) ineinander übergehend ausgebildet sind.

## Beschreibung

### Technisches Gebiet

Die Erfindung betrifft ein Hydrolager, umfassend ein Traglager und ein Auflager, die durch einen im wesentlichen kegelstumpfförmigen Federkörper aus elastomerem Werkstoff aufeinander abgestützt sind und einen Arbeitsraum und einen Ausgleichsraum, die jeweils mit Dämpfungsflüssigkeit gefüllt und durch eine Trennwand in axialer Richtung räumlich voneinander getrennt sowie durch eine erste Dämpfungsvorrichtung zur Dämpfung axial eingeleiteter Schwingungen flüssigkeitsleitend verbunden sind.

### Stand der Technik

Ein solches Hydrolager ist allgemein bekannt, z. B. aus der DE 100 37 954 A1. Bei dem vorbekannten Hydrolager ist das Traglager als innerer erster Stützkörper ausgebildet, der von einem äußeren zweiten Stützkörper mit radialem Abstand umschlossen ist, wobei der erste und der zweite Stützkörper durch einen ersten Federkörper und einen zweiten Federkörper verbunden sind. Der erste Federkörper und der zweite Federkörper begrenzen wenigstens zwei mit Dämpfungsflüssigkeit gefüllte Kammern, die quer zu der Achse des Hydrolagers, die sich in axialer Richtung erstreckt, im Wesentlichen einander in radialer Richtung gegenüberliegend angeordnet und durch eine zweite Dämpfungsöffnung flüssigkeitsleitend verbunden sind. Das vorbekannte Hydrolager umfasst also zwei Dämpfungsvorrichtungen, wobei eine Dämpfungsvorrichtung der eines üblichen Hydrolagers entspricht, bei dem zur Dämpfung in sich axial erstreckender Hauptwirkrichtung Dämpfungsflüssigkeit vom Arbeitsraum durch die erste Dämpfungsvorrichtung hindurch in den Ausgleichsraum und wieder zurück verlagert wird. Die zweite Dämpfungsvorrichtung zur Dämpfung von Schwingungen, die in radialer Richtung quer zur Hauptwirkrichtung in das Hydrolager eingeleitet werden, ist räumlich axial benachbart zur ersten Dämpfungsvorrichtung angeordnet, wobei die beiden Dämpfungsvorrichtungen auf ihren axial einander zugewandten Seiten jeweils durch den kegelstumpfförmigen Federkörper voneinander getrennt sind. Das vorbekannte Hydrolager weist große Abmessungen in axialer Richtung auf, benötigt daher einen entsprechend großen Einbauraum und der Materialeinsatz zur Herstellung des vorbekannten Hydrolagers ist, bedingt durch diese Bauform, relativ hoch.

### Darstellung der Erfindung

Der Erfindung liegt die Aufgabe zugrunde, ein Hydrolager der vorbekannten Art derart weiterzuentwickeln, dass dieses ebenfalls eine Mehrachsdämpfung bei kompakter Bauweise insbesondere in axialer Richtung aufweist. Das Hydrolager soll mit geringem Materialeinsatz kostengünstig herstellbar sein.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass der Federkörper zumindest zwei Teilfederkörper umfasst, die mittels eines Zwischenrings verbunden sind, wobei im Arbeitsraum eine zweite Dämpfungsvorrichtung zur Dämpfung von in radialer Richtung eingeleiteten Schwingungen angeordnet ist und wobei der Zwischenring und die zweite Dämpfungsvorrichtung ineinander übergehend ausgebildet sind.

Bei einer derartigen Ausgestaltung ist von Vorteil, dass sich das erfindungsgemäße Hydrolager bezüglich seiner Abmessungen und daraus resultierend bezüglich des erforderlichen Einbauraums praktisch nicht von herkömmlichen Hydrolagern unterscheidet, die eine Dämpfung ausschließlich in axialer Hauptwirkrichtung bewirken.

Bei dem erfindungsgemäßen Hydrolager ist die zweite Dämpfungsvorrichtung in den Arbeitsraum integriert. Trotz der kompakten Abmessungen insbesondere in axialer Richtung, weist das Hydrolager eine Mehrachsdämpfung auf.

Die erste Dämpfungsvorrichtung dämpft in das Hydrolager eingeleitete Schwingungen in der sich in axialer Richtung erstreckenden Hauptwirkrichtung, wobei diese Dämpfung dadurch erfolgt, dass bei Einleitung von Schwingungen axial in das Hydrolager die Dämpfungsflüssigkeit vom Arbeitsraum durch die erste Dämpfungsvorrichtung und die Trennwand hindurch in den Ausgleichsraum und wieder zurück verlagert wird.

Werden demgegenüber Schwingungen in radialer Richtung in das Hydrolager eingeleitet, ist die zweite Dämpfungsvorrichtung in Funktion.

Die zweite Dämpfungsvorrichtung umfasst bevorzugt zwei oder vier Arbeitskammern, die ein oder zwei Kammerpaare bilden. In dem Maße, wie aus der einen Kammer eines Kammerpaares Dämpfungsflüssigkeit verdrängt wird, nimmt die andere Kammer die verdrängte Dämpfungsflüssigkeit auf. Dadurch ist die zweite Dämpfungsvorrichtung sehr dämpfungseffizient.

Die zweite Dämpfungsvorrichtung ist bevorzugt mit Dämpfungsflüssigkeit gefüllt und gegenüber dem Arbeitsraum während der bestimmungsgemäßen Verwendung des Hydrolagers flüssigkeitsdicht verschlossen. Die beiden Dämpfungsvorrichtungen sind dadurch funkionstechnisch voneinander getrennt.

Bei hohem Innendruck in Hydrolager, also einer schlagartigen Auslenkung, ist ein Druckausgleich möglich. Durch diese Ventilfunktion wird eine Beschädigung des Hydrolagers durch einen unzulässig hohen Innendruck vermieden.

Der Zwischenring kann auf seiner im Arbeitsraum angeordneten Innenumfangsseite gemäß einer ersten Ausgestaltung eine Halteeinrichtung aufweisen, die mit der zweiten Dämpfungsvorrichtung verbunden ist. Durch eine solche Ausgestaltung ist eine konstruktiv einfache Befestigung der zweiten Dämpfungsvorrichtung im Arbeitsraum möglich. Bereits bei herkömmlichen Hydrolagern, die eine Dämpfung eingeleiteter Schwingungen nur axial in Hauptwirkrichtung ermöglichen, sind Zwischenringe bekannt, die den Federkörper in zwei Teilfederkörper unterteilen, um die Gebrauchseigenschaften des Hydrolagers bedarfsweise besser an den jeweiligen Anwendungsfall anpassen zu können. Diese Zwischenringe haben jedoch keine andere Funktion als die Trennung der beiden Teilfederkörper voneinander, um die gewünschten Federeigenschaften zu erreichen.

Die Halteeinrichtung kann als Haltekralle ausgebildet sein, die kraft- und/oder formschlüssig mit der zweiten Dämpfungsvorrichtung verbunden ist. Hierbei ist von Vorteil, dass nach Art eines Baukastensystems aus mehreren zweiten Dämpfungsvorrichtungen die geeignete ausgewählt und mittels der Haltekralle im Arbeitsraum des Hydrolagers befestigt werden kann.

Nach einer anderen Ausgestaltung kann es vorgesehen sein, dass der Zwischenring und die zweite Dämpfungsvorrichtung einstückig ineinander übergehend ausgebildet sind. Dabei ist von Vorteil, dass eine Halteeinrichtung und eine separat erzeugte zweite Dämpfungsvorrichtung, wie zuvor beschrieben, nicht erforderlich sind. Die zweite Dämpfungsvorrichtung bildet einen integralen Bestandteil des Zwischenrings. Das Hydrolager weist dadurch einen besonders einfachen und teilearmen Aufbau auf und die Gefahr von Montagefehlem ist auf ein Minimum begrenzt.

Die zweite Dämpfungsvorrichtung kann ein Kanalbauteil und ein Verschlussteil umfassen, wobei das Kanalbauteil und das Verschlussteil zumindest einen Dämpfungskanal zur Dämpfung radial eingeleiteter Schwingungen begrenzen. Der Dämpfungskanal kann in Strömungsrichtung beiderseits jeweils in einen in der zweiten Dämpfungsvorrichtung angeordneten und mit der Dämpfungsflüssigkeit gefüllten Arbeitsraum münden, wobei zur Dämpfung radial eingeleiteter Schwingungen die innerhalb des Dämpfungskanals befindliche Dämpfungsflüssigkeit hin und her verlagert wird. Dadurch wird eine hohe Dämpfungseffizienz erreicht.

Der Dämpfungskanal kann spiralförmig und in axialer Richtung doppelstöckig ausgebildet sein. Dabei ist von Vorteil, dass der Dämpfungskanal eine besonders große Länge aufweist, dadurch eine große Masse an Dämpfungsflüssigkeit innerhalb des Dämpfungskanals enthalten ist und durch die große Masse an hin- und herschwingender Dämpfungsflüssigkeit tieffrequente großamplitudige Schwingungen besonders wirkungsvoll gedämpft werden können.

Nach einer anderen Ausgestaltung kann es vorgesehen sein, dass die zweite Dämpfungsvorrichtung zwei flüssigkeitsdicht voneinander getrennte Dämpfungskanäle umfasst, die in axialer Richtung benachbart zueinander angeordnet sind. Die zweite Dämpfungsvorrichtung hat dadurch vier Arbeiterkammern. Bei einer solchen Ausgestaltung ist von Vorteil, dass jeder der Dämpfungskanäle jeweils zwei radial einander gegenüberliegend angeordnete Fluidkammern verbinden kann, wobei die Fluidkammern des einen Kanals, bezogen auf die Fluidkammern des anderen Kanals, z. B. um 90° versetzt zueinander angeordnet sind. Dadurch besteht die Möglichkeit, radial in das Hydrolager eingeleitete Schwingungen in unterschiedlichen Richtungen dämpfen zu können, beispielsweise radial in Fahrtrichtung in das Hydrolager eingeleitete Schwingungen und radial in das Hydrolager eingeleitete Schwingung quer dazu.

Das Traglager kann, im Längsschnitt des Hydrolagers betrachtet, im Wesentlichen T-förmig ausgebildet sein. Das Traglager kann eine Befestigungseinrichtung umfassen, die im Zentrum angeordnet ist.

Eine solche Befestigungseinrichtung kann z. B. entweder durch einen Gewindebolzen gebildet sein, der die im Wesentlichen scheibenförmige Oberseite des Traglagers überragt.

Nach einer anderen Ausgestaltung kann die Befestigungseinrichtung durch ein Gewindesackloch gebildet sein, das von der scheibenförmigen Oberseite des Traglagers und dem Axialvorsprung begrenzt ist.

Der Axialvorsprung des Traglagers ist, relativ zur zweiten Dämpfungsvorrichtung, in radialer Richtung beweglich und bewirkt dadurch bei Einleitung radialer Schwingungen in das Hydrolager eine Aktivierung der zweiten Dämpfungsvorrichtung. Bei einer radialen Relativverlagerung des Axialvorsprungs des Traglagers relativ zur zweiten Dämpfungsvorrichtung wird die Dämpfungsflüssigkeit innerhalb der Kammern über den Dämpfungskanal/die Dämpfungskanäle der zweiten Dämpfungsvorrichtung hin-und herverlagert. Dadurch werden die in radialer Richtung eingeleiteten Schwingungen gedämpft.

Das Traglager kann einen sich axial in Richtung des Arbeitsraumes erstreckenden Mitnehmer umfassen, wobei das Traglager und der Mitnehmer zusammen eine axiale Erstreckung aufweisen, die im Wesentlichen der axialen Erstreckung der zweiten Dämpfungsvorrichtung entspricht. Durch eine derartige Ausgestaltung kann die zweite Dämpfungsvorrichtung besonders exakt aktiviert werden. Der Axialvorsprung des Traglagers und der Mitnehmer bestehen jeweils aus einem zähharten Material, beispielsweise aus einem metallischen Werkstoff. Die Übertragung radialer Relatiwerlagerungen des Traglagers auf die Dämpfungsflüssigkeit in den Kammern der zweiten Dämpfungsvorrichtung ist dadurch besonders direkt und unmittelbar möglich.

Im Hinblick auf eine möglichst einfache und kostengünstige Herstellbarkeit des Hydrolagers kann es vorgesehen sein, dass das Traglager und der Mitnehmer einstückig ineinander übergehend ausgebildet sind.

Davon abweichend besteht die Möglichkeit, dass der Mitnehmer separat erzeugt und bevorzugt koaxial mit dem Traglager verbunden ist. Unterschiedliche Mitnehmer können dadurch mit unterschiedlichen Traglagern und unterschiedlichen Federkörpern kombiniert werden, um eine möglichst gute Anpassung der Gebrauchseigenschaften des Hydrolagers an den jeweiligen Anwendungsfall zu ermöglichen.

Für manche Anwendungsfälle ist es vorteilhaft, wenn das Hydrolager zusätzlich zur Dämpfung in axialer und radialer Richtung auch eine Tilgerfunktion aufweist.

Dazu kann es vorgesehen sein, dass im Arbeitsraum ein Tilgerkanal angeordnet ist. Der Tilgerkanal ist derart dimensioniert, dass zur Tilgung von Leerlaufschwingungen einer Verbrennungskraftmaschine die innerhalb des Tilgerkanals angeordnete Dämpfungsflüssigkeit aus dem Arbeitsraum phasenverschoben, bevorzugt gegenphasig in axialer Richtung, hin- und herschwingt. Der Tilgerkanal ist dazu flüssigkeitsleitend mit dem Arbeitsraum verbunden.

Der Tilgerkanal kann zumindest teilweise von dem Verschlussteil der zweiten Dämpfungsvorrichtung begrenzt sein. Die Herstellung des Tilgerkanals ist dadurch besonders einfach.

Der Tilgerkanal kann radial außenseitig von dem Kanalbauteil der zweiten Dämpfungsvorrichtung umschlossen sein. Durch die Integration des Tilgerkanal in die zweite Dämpfungsvorrichtung weist das Hydrolager einen einfachen und teilearmen Aufbau auf und ist kostengünstig herstellbar. Separater Bauteile zur Bereitstellung einer Tilgerfunktion bedarf es daher nicht.

Kurzbeschreibung der Zeichnung

Zehn Ausführungsbeispiele des erfindungsgemäßen Hydrolagers werden nachfolgend anhand der Figuren 1 bis 20 näher erläutert. Diese zeigen jeweils in schematischer Darstellung:
Fig. 1 ein erstes Ausführungsbeispiel eines Hydrolagers in längsgeschnittener Darstellung, bei dem der Zwischenring und die zweite Dämpfungsvorrichtung einstückig ineinander übergehend ausgebildet sind;
Fig. 2 einen Querschnitt durch das Hydrolager aus Fig. 1,
Fig. 3 ein zweites Ausführungsbeispiel eines Hydrolagers, ähnlich dem Hydrolager aus Fig. 1, mit abweichend gestalteter zweiter Dämpfungsvorrichtung,
Fig. 4 einen Querschnitt durch das Hydrolager aus Fig. 3,
Fig. 5 ein drittes Ausführungsbeispiel eines Hydrolagers, bei dem der Dämpfungskanal der zweiten Dämpfungsvorrichtung spiralförmig ausgebildet ist,
Fig. 6 einen Querschnitt durch das Hydrolager aus Fig. 5,
Fig. 7 ein viertes Ausführungsbeispiel eines Hydrolagers, bei dem die zweite Dämpfungsvorrichtung zwei flüssigkeitsdicht voneinander getrennte Dämpfungskanäle umfasst,
Fig. 8 einen Querschnitt durch das Hydrolager aus Fig. 7,
Fig. 9 ein fünftes Ausführungsbeispiel eines Hydrolagers, das zusätzlich in axialer Richtung eine Tilgerfunktion aufweist,
Fig. 10 einen Querschnitt durch das Hydrolager aus Fig. 9,
Fig. 11 ein sechstes Ausführungsbeispiel eines Hydrolagers, ähnlich dem Hydrolager aus Fig. 9, umfassend einen weiteren Axialtilger,
Fig. 12 einen Querschnitt durch das Hydrolager aus Fig. 11,
Fig. 13 ein siebtes Ausführungsbeispiel eines Hydrolagers mit zweiteiligem Zwischenring und zweiteiligem Federkörper,
Fig. 14 einen Querschnitt durch das Hydrolager aus Fig. 14,
Fig. 15 ein achtes Ausführungsbeispiel eines Hydrolagers, bei dem die zweite Dämpfungsvorrichtung zusätzlich eine Membran zur Entkopplung höherfrequenter, kleinamplitudiger Schwingungen aufweist,
Fig. 16 eine Draufsicht des Hydrolagers aus Fig. 15,
Fig. 17 ein neuntes Ausführungsbeispiel eines Hydrolagers, bei dem der Zwischenring eine als Haltekralle ausgebildete Halteeinrichtung zur Befestigung der zweiten Dämpfungsvorrichtung aufweist,
Fig. 18 einen Querschnitt durch das Hydrolager aus Fig. 17,
Fig. 19 ein zehntes Ausführungsbeispiel des Hydrolagers, ähnlich dem Hydrolager aus Fig. 3, wobei das Traglager und ein Mitnehmer einstückig ineinander übergehend ausgebildet sind,
Fig. 20 einen Querschnitt durch das Hydrolager aus Fig. 19.

### Ausführung der Erfindung

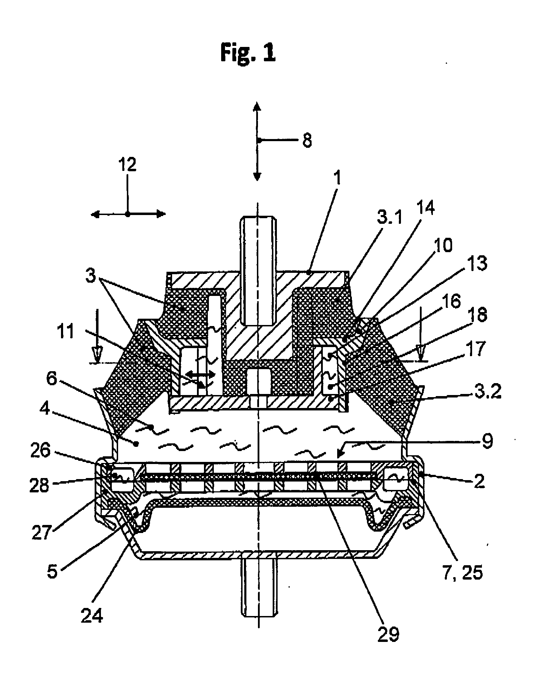

In den Fig. 1 bis 20 sind zehn Ausführungsbeispiele eines Hydrolagers gezeigt, die als Motorlager zur Anwendung gelangen und ein Traglager 1 und ein Auflager 2 umfassen, die durch einen kegelstumpfförmigen ausgebildeten Federkörper 3 aufeinander abgestützt sind. Der Federkörper 3 umfasst zwei Teilfederkörper 3.1, 3.2, die mittels eines Zwischenrings 10 verbunden sind. Das Traglager 1 und das Auflager 2 bestehen jeweils aus einem metallischen Werkstoff, der Federkörper 3 aus einem elastomeren Werkstoff. Das Traglager 1 und das Auflager 2 können abweichend jeweils aus einem Kunststoff bestehen oder durch ein Verbundteil gebildet sein. Das Hydrolager umfasst einen Arbeitsraum 4 und einen Ausgleichsraum 5, wobei der Ausgleichsraum 5 auf seiner dem Arbeitsraum 4 axial abgewandten Seite durch eine im Wesentlichen drucklos volumenaufnehmende rollbalgförmig ausgebildete Membran 24 begrenzt ist. Der Arbeitsraum 4 und der Ausgleichsraum 5 sind jeweils mit Dämpfungsflüssigkeit 6 gefüllt und durch die Trennwand 7 in axialer Richtung 8 räumlich voneinander getrennt. Die Trennwand 7 umfasst die erste Dämpfungsvorrichtung 9 zur Dämpfung axial eingeleiteter Schwingungen.

Die Trennwand 7 weist in den hier gezeigten Ausführungsbeispielen einen Düsenkäfig 25 mit einer oberen Düsenscheibe 26 und einer unteren Düsenscheibe 27 auf, wobei die beiden Düsenscheiben 26, 27 im Bereich ihres Außenumfangs einen Kanal 28 zur Dämpfung tieffrequenter großamplitudiger Schwingungen begrenzen. Die erste Dämpfungsvorrichtung 9 ist in den hier gezeigten Ausführungsbeispielen Bestandteil der Trennwand 7.

Zwischen den beiden Düsenscheiben 26, 27 ist eine Isolationsmembran 29 angeordnet, die aus einem elastomeren Werkstoff besteht, von Dämpfungsflüssigkeit aus dem Arbeitsraum 4 und dem Ausgleichsraum 5 beaufschlagt und elastisch nachgiebig zwischen den Düsenscheiben 26, 27 angeordnet ist. Die Isolationsmembran 29 hat die Aufgabe, kleinamplitudige hochfrequente Schwingungen zu isolieren. Derartige Schwingungen werden z. B. aus dem Gas- und Massenkräften des Motors erzeugt.

Die Hydrolager weisen zusätzlich zur Dämpfung in axialer Richtung 8 eine Dämpfung in zumindest einer radialen Richtung 12 auf. Diese Dämpfung in radialer Richtung 12 wird durch die zweite Dämpfungsvorrichtung 11 erzielt, wobei die zweite Dämpfungsvorrichtung 11 im Arbeitsraum 4 angeordnet und am Zwischenring 10 festgelegt ist.

Die Abmessungen der Hydrolager sowie die erforderlichen Einbauräume unterscheiden sich praktisch nicht von Hydrolagern mit oder ohne Zwischenring, durch die nur eine Dämpfung in axialer Richtung 8 realisiert werden kann. Das erfindungsgemäße Hydrolager weist insgesamt kompakte Abmessungen auf, hat einen teilearmen Aufbau und ist deshalb kostengünstig herstellbar.

Zur Dämpfung von in radialer Richtung 12 eingeleiteten Schwingungen verlagert sich das Traglager 1 relativ zur zweiten Dämpfungsvorrichtung 11 in radialer Richtung und bewirkt dadurch eine Hin- und Herverlagerung der Dämpfungsflüssigkeit 13 in den Dämpfungskanälen 18, 19 der zweiten Dämpfungsvorrichtung 11.

In jedem der gezeigten Ausführungsbeispiele ist die zweite Dämpfungsvorrichtung 11 gegenüber dem Arbeitsraum 4 und der darin befindlichen Dämpfungsflüssigkeit 6 während der bestimmungsgemäßen Verwendung im Normalbetrieb flüssigkeitsdicht verschlossen.

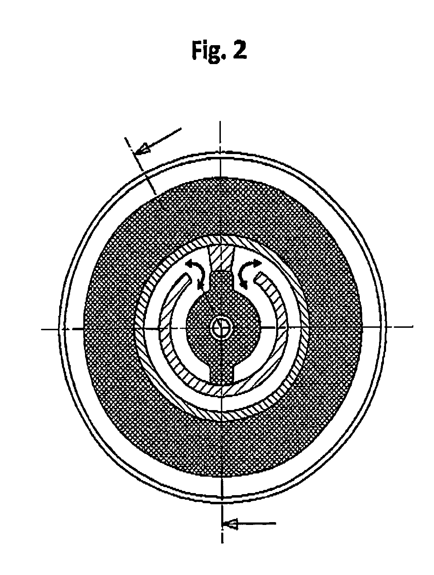

In den Fig. 1 und 2 ist ein erstes Ausführungsbeispiel gezeigt. Die zweite Dämpfungsvorrichtung 11 umfasst das Kanalbauteil 16 und das Verschlussteil 17, wobei das Verschlussteil 17 den sich in Umfangsrichtung erstreckenden Dämpfungskanal 18 des Kanalbauteils 16 zum Arbeitsraum 4 hin flüssigkeitsdicht verschließt. Das Kanalbauteil 16 ist einstückig ineinander übergehend und materialeinheitlich mit dem Zwischenring 10 ausgebildet.

In Fig. 2 ist ein Querschnitt durch das Hydrolager aus Fig. 1 gezeigt. Der Dämpfungskanal erstreckt sich einmal in Umfangsrichtung.

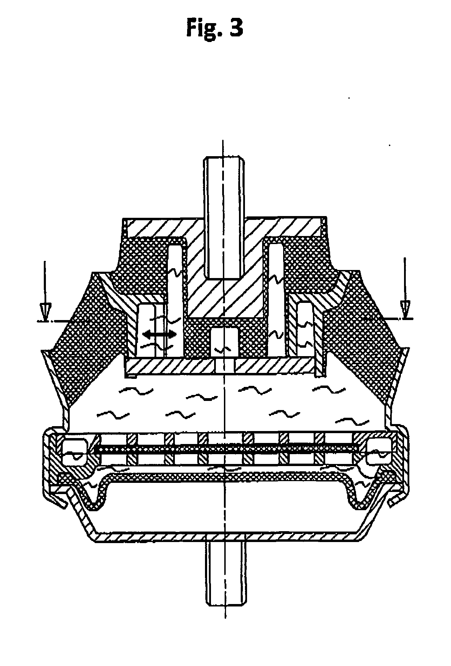

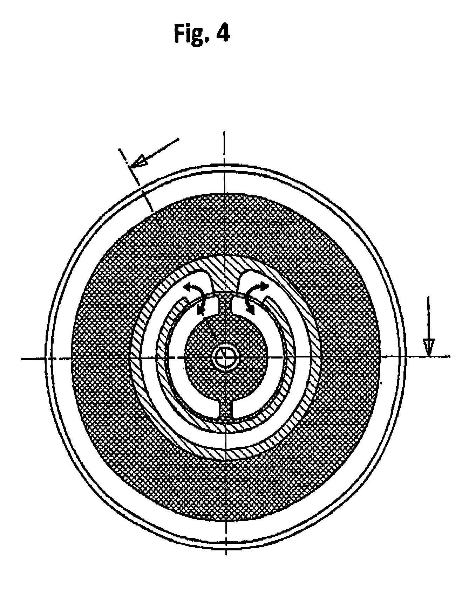

In den Fig. 3 und 4 ist ein zweites Ausführungsbeispiel des Hydrolagers ähnlich dem Ausführungsbeispiel aus den Fig. 1 und 2, gezeigt. Die zweite Dämpfungsvorrichtung 11 umfasst auch hier ein Kanalbauteil 96 und ein Verschlussteil 17, die jedoch im Vergleich zum ersten Ausführungsbeispiel aus den Fig. 1 und 2 abweichend gestaltet sind. Das Kanalbauteü 16 begrenzt den Dämpfungskanal 18 in radialer Richtung innen- und außenseitig, wobei der Dämpfungskanal 18 auf seiner dem Arbeitsraum 4 axial zugewandten Stirnseite durch das Verschlussteil 17 verschlossen ist.

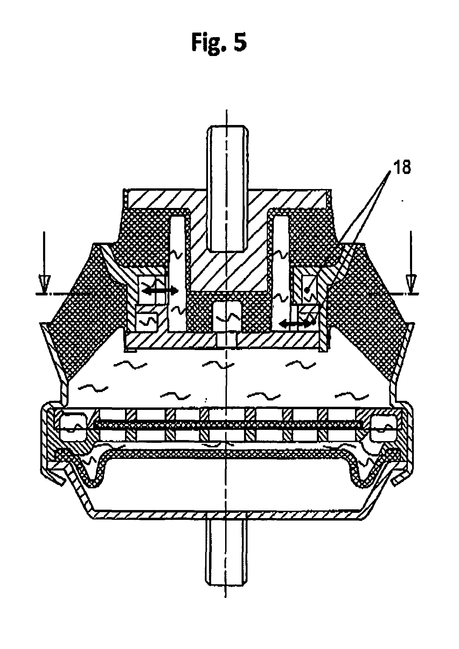

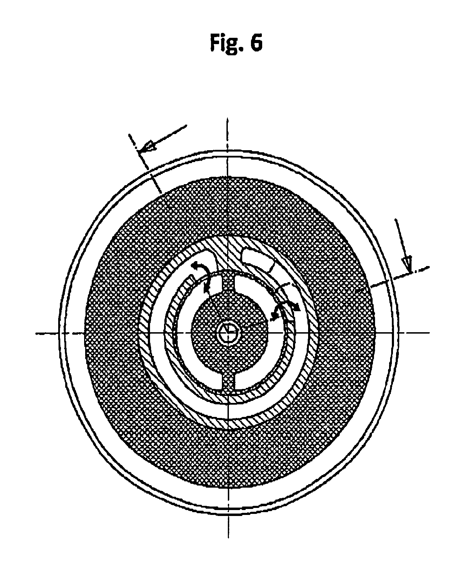

In den Fig. 5 und 6 ist ein drittes Ausführungsbeispiel des Hydrolagers gezeigt, das sich von den beiden zuvor beschriebenen Ausführungsbeispielen hauptsächlich dadurch unterscheidet, dass die zweite Dämpfungsvorrichtung 11 einen besonders langen Dämpfungskanal 18 aufweist, der spiralförmig und in axialer Richtung 8 doppelstöckig ausgebildet ist. Genau wie im zweiten Ausführungsbeispiel gemäß Figuren 3 und 4 verschließt das Verschlussteil 17 den Dämpfungskanal 18 stirnseitig axial in Richtung des Arbeitsraums 4.

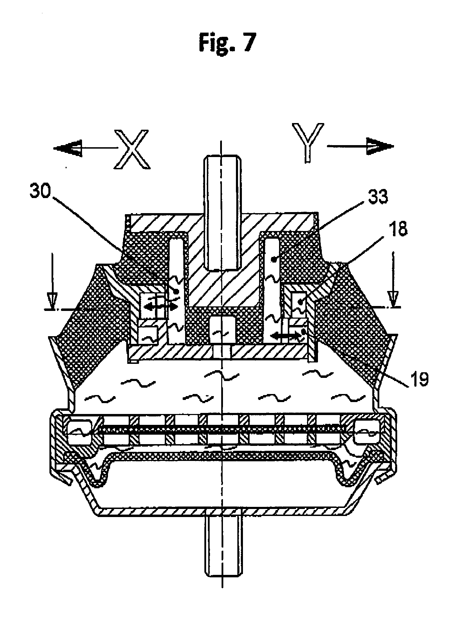

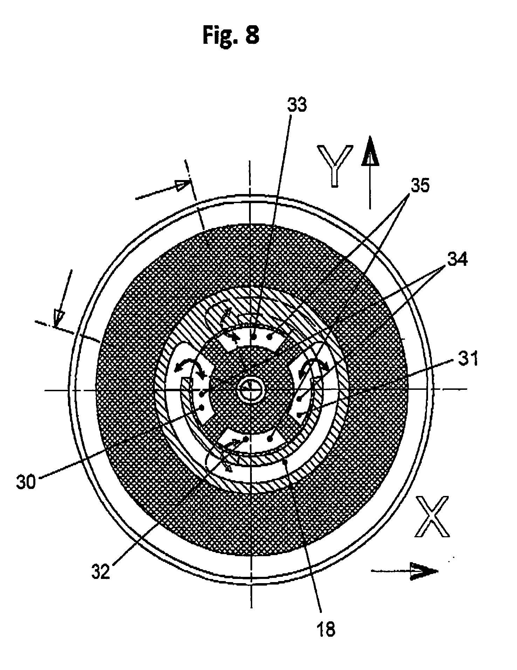

In den Fig. 7 und 8 ist ein viertes Ausführungsbeispiel des Hydrolagers gezeigt, das sich von dem dritten Ausführungsbeispiel gemäß Fig. 5 und 6 hauptsächlich dadurch unterscheidet, dass die zweite Dämpfungsvorrichtung 11 zwei Dämpfungskanäle 18, 19 umfasst, die in axialer Richtung 8 benachbart zueinander angeordnet und flüssigkeitsdicht voneinander getrennt sind. Die zweite Dämpfungsvorrichtung weist dadurch vier Kammern 30, 31; 32, 33 auf, die die Kammerpaare 34, 35 bilden. Durch eine derartige Ausgestaltung ist von Vorteil, dass die Lage der Kammerpaare 34, 35 eines jeden Dämpfungskanals 18, 19 derart angeordnet werden kann, dass Dämpfung in unterschiedliche radiale Richtungen X, Y erreicht werden kann.

In Fig. 8 ist ein Querschnitt durch das Hydrolager aus Fig. 7 gezeigt. In dieser Darstellung ist zu erkennen, dass die Kammern 30, 31; 32, 33 der Kammerpaare 34, 35 um 90° versetzt zueinander angeordnet sind, so dass radial in das Hydrolager eingeleitete Schwingungen, wie hier dargestellt, in X-Richtung und γ-Richtung gedämpft werden können.

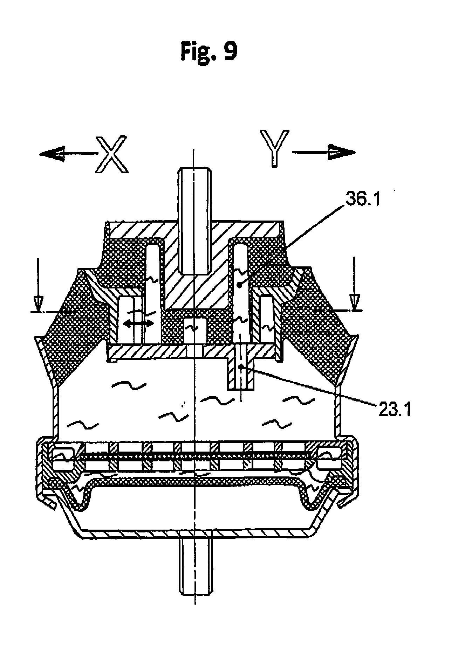

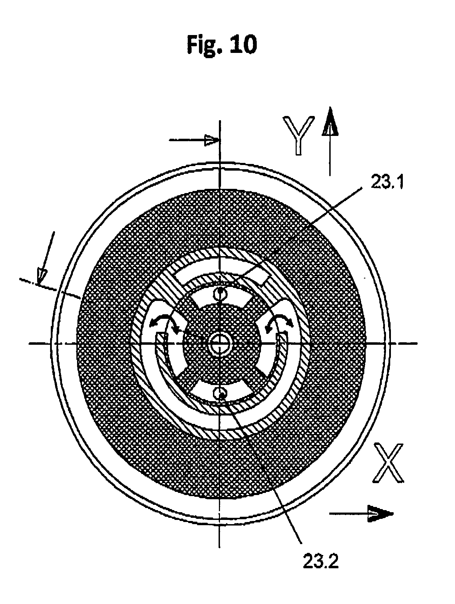

In den Fig. 9 und 10 ist ein fünftes Ausführungsbeispiel gezeigt. Bei dem Hydrolager ist zusätzlich zu der ersten und zweiten Dämpfungsvorrichtung 9, 11 zumindest ein Tilgerkanal 23, hier zwei Tilgerkanäle 23.1, 23.2 vorgesehen, durch den z. B. Schwingungen, wie sie beim Anlassen einer Verbrennungskraftmaschine entstehen, getilgt werden können. Die Tilgerkanäle 23.1 23.2 sind im Verschlussteil 17 der zweiten Dämpfungsvorrichtung 11 integriert und verbinden die Tilgerkammer 36 flüssigkeitsleitend mit dem Arbeitsraum 4.

In X-Richtung erfolgte Schwingungsdämpfung durch die zweite Dämpfungsvorrichtung 11, in Y-Richtung durch die Kammern 36.1 und 23.1 mit 36.2 und 23.2.

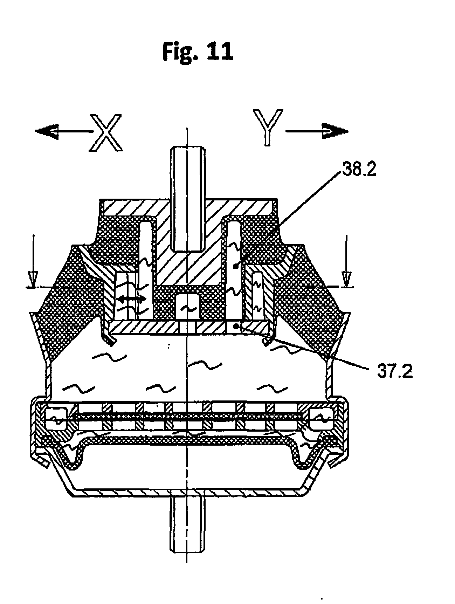

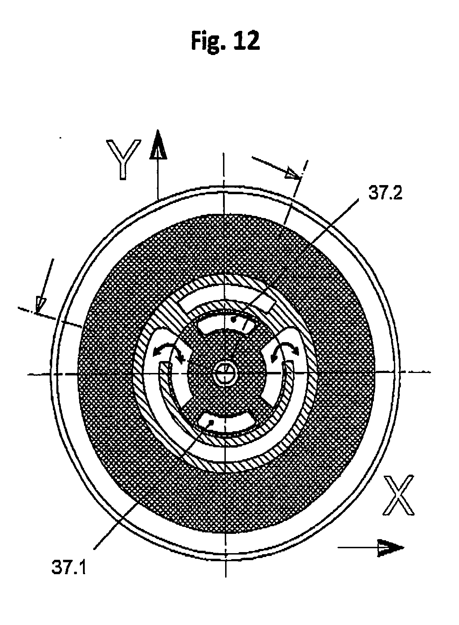

In den Fig. 11 und 12 ist ein sechstes Ausführungsbeispiel ähnlich dem fünften Ausführungsbeispiel aus den Fig. 9 und 10 gezeigt. Das Verschlussteil 17 weist zusätzlich eine Ausnehmung 37 auf, die in eine weitere Kammer 38 mündet. Hierbei ist von Vorteil, dass die Dämpfung in radialer γ-Richtung minimiert wird, da die Y-Kammern 38.1, 38.2 die Dämpfungsflüssigkeit ungehindert durch die großen Ausnehmungen 37.1, 37.2 in die Kammer 4 strömen lassen.

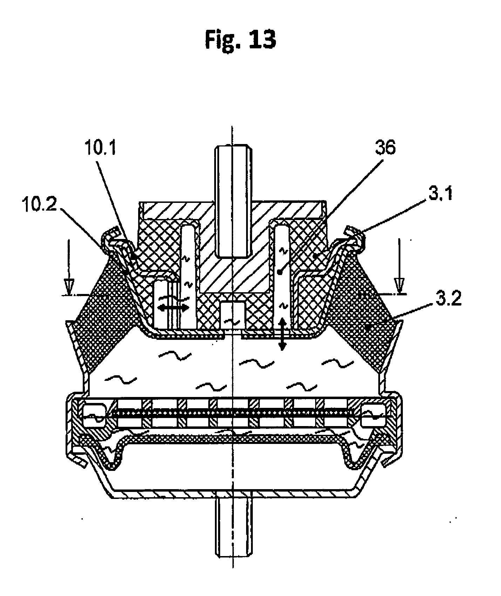

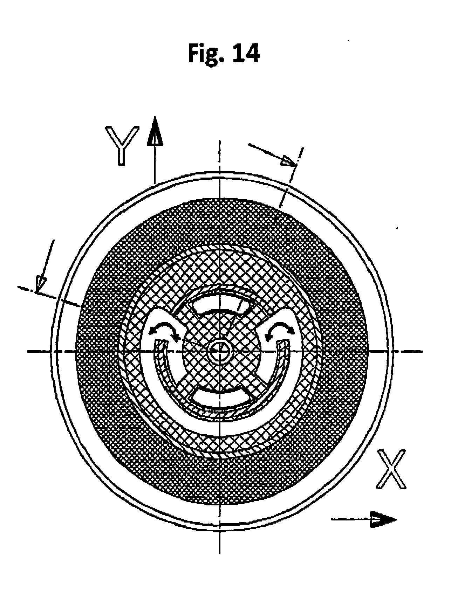

In den Fig. 13 und 14 ist ein siebtes Ausführungsbeispiel gezeigt, bei dem zwischen den beiden Teilfederkörpem 3.1, 3.2 ein zweiteilig ausgebildeter Zwischenring 10.1, 10.2 angeordnet ist. Durch den zweiteiligen Zwischenring 10.1, 10.2 ist die zweite Dämpfungsvorrichtung 11 gebildet, wobei die Funktion des Hydrolagers im Wesentlichen der Funktion des Hydrolagers aus den Fig. 11 und 12 entspricht.

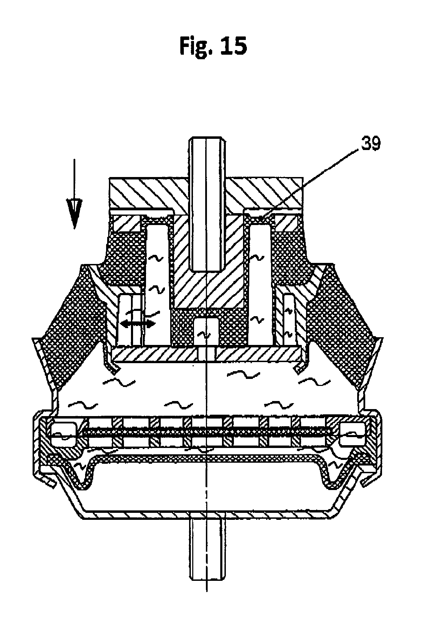

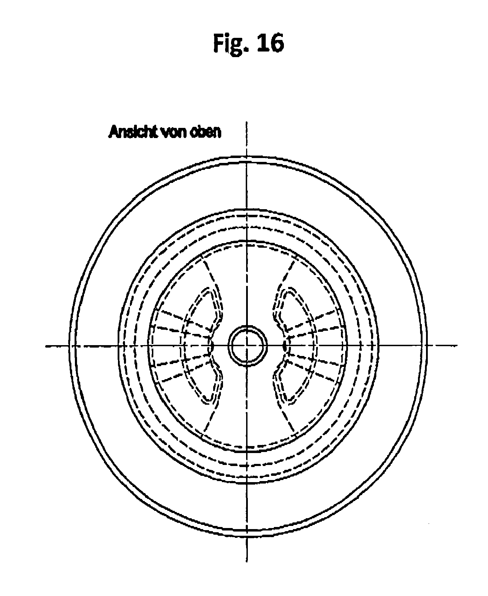

In den Fig. 15 und 16 ist ein achtes Ausführungsbeispiel des Hydrolagers gezeigt. Die zweite Dämpfungsvorrichtung 11 umfasst im Gegensatz zu den zuvor beschriebenen Ausführungsbeispielen zusätzlich eine Entkoppelungsmembran 39, die in axialer Richtung 8 einerseits das Kammerpaar der zweiten Dämpfungsvorrichtung 11 begrenzt und in axialer Richtung 8 andererseits mit dem Umgebungsdruck des Hydrolagers beaufschlagt ist. Durch die Entkoppelungsmembran 39 können höherfrequente, kleinamplitudigere Schwingungen, die in radialer Richtung in das Hydrolager eingeleitet werden, isoliert werden. Die Funktion der Entkoppelungsmembran 39 macht sich im Betrieb des Hydrolagers insbesondere dann positiv bemerkbar, wenn das radiale Dämpfungssystem dynamisch verhärtet und gleichzeitig Anregungen aus den Gas- und Massenkräften in Fahrzeug-Längs-oder Querrichtung zu entkoppeln sind.

In Fig. 16 ist eine Draufsicht auf das Hydrolager aus Fig. 15 gezeigt.

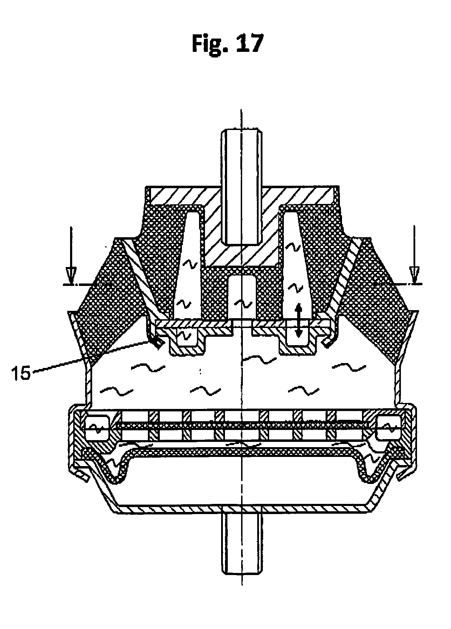

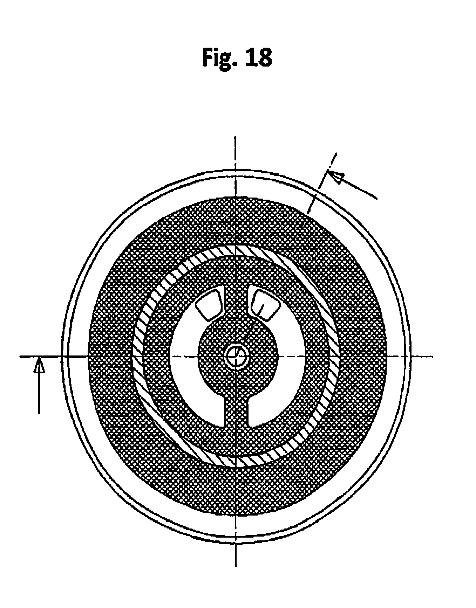

In den Fig. 17 und 18 ist ein neuntes Ausführungsbeispiel des Hydrolagers gezeigt, das sich von den zuvor beschriebenen Hydrolagern dadurch unterscheidet, dass der Zwischenring 10 auf seiner im Arbeitsraum 4 angeordneten Innenumfangsseite 14 eine Halteeinrichtung 15 aufweist, die als Haltekralle ausgebildet ist und die zweite Dämpfungsvorrichtung 11 aufnimmt. Hierbei ist von Vorteil, dass die Halteeinrichtung 15 unterschiedlich gestaltete und unterschiedlich wirksame zweite Dämpfungsvorrichtungen 11 aufnehmen kann. Dadurch können unterschiedliche zweite Dämpfungsvorrichtungen mit einem ansonsten gleichen Hydrolager kombiniert werden. Ein solches Hydrolager kann besonders einfach und wirkungsvoll an die jeweiligen Gegebenheiten des Anwendungsfalles angepasst werden.

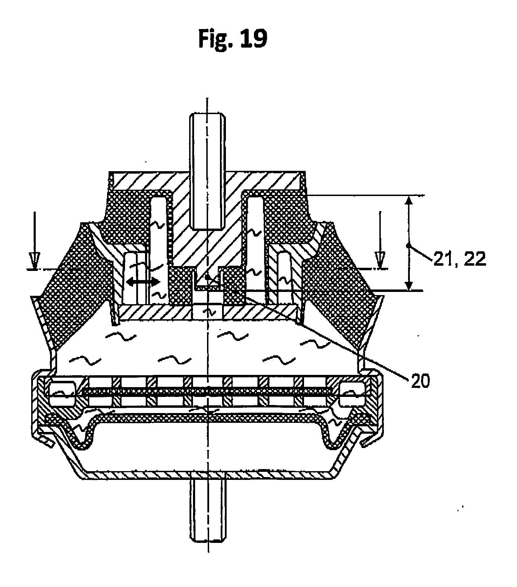

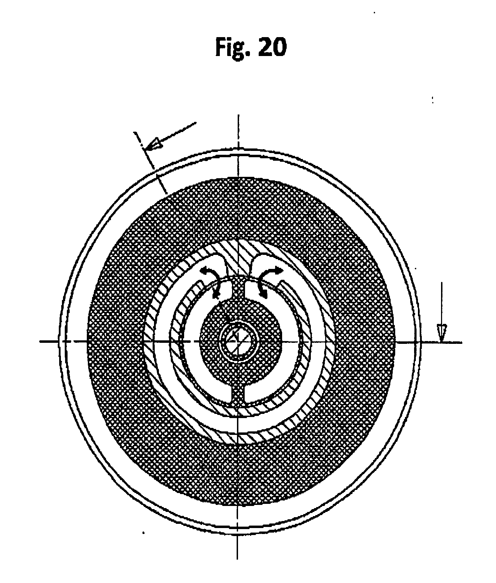

In den Fig. 19 und 20 ist ein zehntes Ausführungsbeispiel des Hydrolagers gezeigt, dass im Wesentlichen dem zweiten Ausführungsbeispiel aus den Fig. 3 und 4 entspricht. Das Traglager 1 ist, wie bei den zuvor beschriebenen Ausführungsbeispielen, im Längsschnitt des Hydrolagers betrachtet, im Wesentlichen T-förmig ausgebildet, weist jedoch zusätzlich einen sich in axialer Richtung 8 erstreckenden Mitnehmer 20 auf. Das Traglager 1 und der Mitnehmer 2 weisen zusammen eine axiale Erstreckung 21 auf, die im Wesentlichen der axialen Erstreckung 22 der zweiten Dämpfungsvorrichtung 11 entspricht. Die Übertragung radial eingeleiteter Schwingungen auf die zweite Dämpfungsvorrichtung 11 ist dadurch besonders direkt.

## Patentansprüche

1. Hydrolager, umfassend ein Traglager (1) und ein Auflager (2), die durch einen im wesentlichen kegelstumpfförmigen Federkörper (3) aus elastomerem Werkstoff aufeinander abgestützt sind und einen Arbeitsraum (4) und einen Ausgleichsraum (5), die jeweils mit Dämpfungsflüssigkeit (6) gefüllt und durch eine Trennwand (7) in axialer Richtung (8) räumlich voneinander getrennt sowie durch eine erste Dämpfungsvorrichtung (9) zur Dämpfung axial eingeleiteter Schwingungen flüssigkeitsleitend verbunden sind, **dadurch gekennzeichnet, dass** der Federkörper (3) zumindest zwei Teilfederkörper (3.1, 3.2) umfasst, die mittels eines Zwischenrings (10) verbunden sind, dass im Arbeitsraum (4) eine zweite Dämpfungsvorrichtung (11) zur Dämpfung von in radialer Richtung (12) eingeleiteten Schwingungen angeordnet ist und dass der Zwischenring (10) und die zweite Dämpfungsvorrichtung (11) ineinander übergehend ausgebildet sind.

2. Hydrolager nach Anspruch 1, **dadurch gekennzeichnet, dass** die zweite Dämpfungsvorrichtung (11) mit Dämpfungsflüssigkeit (13) gefüllt und gegenüber dem Arbeitsraum (4) flüssigkeitsdicht verschlossen ist.

3. Hydrolager nach einem der Ansprüche 1 oder 2, **dadurch gekennzeichnet, dass** der Zwischenring (10) auf seiner im Arbeitsraum (4) angeordneten Innenumfangsseite (14) eine Halteeinrichtung (15) aufweist, die mit der zweiten Dämpfungsvorrichtung (11) verbunden ist.

4. Hydrolager nach Anspruch 3, **dadurch gekennzeichnet, dass** die Halteeinrichtung (15) als Haltekralle ausgebildet ist, die kraft- und/oder formschlüssig mit der zweiten Dämpfungsvorrichtung (11) verbunden ist.

5. Hydrolager nach einem der Ansprüche 1 oder 2, **dadurch gekennzeichnet, dass** der Zwischenring (10) und die zweite Dämpfungsvorrichtung (11) einstückig ineinander übergehend ausgebildet sind.

6. Hydrolager nach einem der Ansprüche 1 bis 5, **dadurch gekennzeichnet, dass** die zweite Dämpfungsvorrichtung (11) ein Kanalbauteil (16) und ein Verschlussteil (17) umfasst und dass das Kanalbauteil (16) und das Verschlussteil (17) zumindest einen Dämpfungskanal (18) zur Dämpfung radial eingeleiteter Schwingungen begrenzen.

7. Hydrolager nach Anspruch 6, **dadurch gekennzeichnet, dass** der Dämpfungskanal (18) spiralförmig und in axialer Richtung (8) doppelstöckig ausgebildet ist.

8. Hydrolager nach Anspruch 6, **dadurch gekennzeichnet, dass** die zweite Dämpfungsvorrichtung (11) zwei flüssigkeitsdicht voneinander getrennte Dämpfungskanäle (18,19) umfasst, die in axialer Richtung (8) benachbart zueinander angeordnet sind.

9. Hydrolager nach einem der Ansprüche 1 bis 8, **dadurch gekennzeichnet, dass** das Traglager (1), im Längsschnitt des Hydrolagers betrachtet, im Wesentlichen T-förmig ausgebildet ist.

10. Hydrolager nach einem der Ansprüche 1 bis 9, **dadurch gekennzeichnet, dass** das Traglager (1) einen sich axial in Richtung des Arbeitsraumes (4) erstreckenden Mitnehmer (20) umfasst, wobei das Traglager (1) und der Mitnehmer (20) zusammen eine axiale Erstreckung (21) aufweisen, die im Wesentlichen der axialen Erstreckung (22) der zweiten Dämpfungsvorrichtung (11) entspricht.

11. Hydrolager nach einem der Ansprüche 1 bis 10, **dadurch gekennzeichnet, dass** das Traglager (1) und der Mitnehmer (20) einstückig ineinander übergehend ausgebildet sind.

12. Hydrolager nach einem der Ansprüche 1 bis 11, **dadurch gekennzeichnet, dass** im Arbeitsraum (4) ein Tilgerkanal (23) angeordnet ist.

13. Hydrolager nach Anspruch 12, **dadurch gekennzeichnet, dass** der Tilgerkanal (23) zumindest teilweise von dem Verschlussteil (17) der zweiten Dämpfungsvorrichtung (11) begrenzt ist.

14. Hydrolager nach einem der Ansprüche 12 oder 13, **dadurch gekennzeichnet, dass** der Tilgerkanal (23) radial außenseitig von dem Kanalbauteil (16) der zweiten Dämpfungsvorrichtung (11) umschlossen ist.
